(19) Europäisches Patentamt
European Patent Office
Office européen des brevets

(11) **EP 2 958 970 B1**

(12) **EUROPEAN PATENT SPECIFICATION**

(45) Date of publication and mention
of the grant of the patent:
**01.06.2022 Bulletin 2022/22**

(21) Application number: **14753995.1**

(22) Date of filing: **16.01.2014**

(51) International Patent Classification (IPC):
*C09J 123/12* $^{(2006.01)}$    *C09J 11/00* $^{(2006.01)}$
*C09J 153/00* $^{(2006.01)}$    *B32B 5/02* $^{(2006.01)}$
*B32B 27/12* $^{(2006.01)}$    *B32B 27/32* $^{(2006.01)}$
*B32B 7/12* $^{(2006.01)}$

(52) Cooperative Patent Classification (CPC):
**C09J 153/00; B32B 5/022; B32B 7/12;**
**B32B 27/12; B32B 27/327;** B32B 2307/51;
B32B 2307/548; B32B 2307/704; B32B 2555/02

(86) International application number:
**PCT/US2014/011855**

(87) International publication number:
**WO 2014/130180 (28.08.2014 Gazette 2014/35)**

(54) **ELASTIC ATTACHMENT ADHESIVE AND USE THEREOF**

KLEBSTOFF ZUR ELASTISCHEN BEFESTIGUNG UND VERWENDUNG DAVON

ADHÉSIF DE FIXATION ÉLASTIQUE ET SON UTILISATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.02.2013 US 201361767447 P**

(43) Date of publication of application:
**30.12.2015 Bulletin 2015/53**

(73) Proprietor: **Henkel IP & Holding GmbH**
**40589 Düsseldorf (DE)**

(72) Inventors:
• **DE JESUS, Maria Cristina Barbosa**
**Basking Ridge, New Jersey 07920 (US)**
• **PAUL, Charles W.**
**Madison, New Jersey 07940 (US)**
• **ALEXIS, Valerie**
**New Brunswick, NewJersey 08901 (US)**

(74) Representative: **Henkel IP Department**
**c/o Henkel AG & Co. KGaA**
**Henkelstraße 67**
**40589 Düsseldorf (DE)**

(56) References cited:
**EP-B1- 1 924 648**      **WO-A1-2012/051239**
**WO-A1-2012/149391**   **WO-A1-2013/003198**
**US-A1- 2008 264 562**   **US-A1- 2012 016 086**
**US-B1- 6 329 468**      **US-B2- 7 262 251**

• **FERRARO A ET AL: "Advances in Ziegler-Natta catalysts for polypropylene", KINETICS AND CATALYSIS, KLUWER ACADEMIC PUBLISHERS, BO, vol. 47, no. 2, 1 March 2006 (2006-03-01), pages 176-185, XP019402720, ISSN: 1608-3210, DOI: 10.1134/S0023158406020042**

**Description**

FIELD OF THE INVENTION

The present invention relates to elastic attachment adhesives that comprise non-metallocene catalyzed polymers. Advantageously, the elastic attachment adhesives have similar performances to those adhesives that are formed with metallocene-catalyzed polymers. Also, the elastic attachment adhesives have stable creep performance under prolonged aging parameters, making these adhesives particularly well suited for elastic applications.

BACKGROUND OF THE INVENTION

Styrene block copolymers have been used as the primary polymers in the elastic attachment hot melt adhesives. Styrene-based adhesives have consistent sprayability with a balanced elasticity and strength, due to the elastic midblocks and hard end-block of the styrene block copolymer. Such adhesives typically require large additions of tackifiers and/or plasticizers due to the high viscous nature of the styrene block copolymers; however, large additions of tackifiers and plasticizers negatively affect the performance of the elastic attachment adhesive upon aging.

Other block copolymers, such as ethylene/alpha-olefin interpolymer, have also been utilized in elastic attachment adhesives, e.g., US 7,989,543 and US 20110021103. Adhesives formed with ethylene/alpha-olefin interpolymer demonstrate initial elasticity and creep resistance; however, these properties wane or disappear upon aging. Also, employing a combination of ethylene-propylene rubber (EPR) and semicrystalline propylene (e.g., EP 1214368) to achieve a balanced elasticity and strength also requires large additions of tackifiers and/or plasticizers in the adhesive, which negatively affect the adhesive performance upon aging.

Adhesives without the block-like structure in the polymer, such as polybutylenes (e.g., US 6,218,457), fail to achieve balanced elasticity and strength. Moreover, using a blended system of a semicrystalline propylene (syndiotactic or isotatic polypropylene) and an amorphous polymer, e.g., US 6,653,385, US 6,774,069, US 7,262,251 and US 7,067,585, fails to maintain the balanced elasticity and strength upon adhesive aging. US 2012/0016086 A1 describes adhesives containing polymer systems with reduced melt viscosity.

While non-metallocene catalyzed polymers have been used for elastic adhesives to decrease cost, such adhesives spray inconsistently and unevenly. It is desirable for the adhesive to spray uniformly and consistently at the application temperature. Metallocene-catalyzed polymers in the adhesive provide better sprayability because the molecular weight distribution of the polymer is narrower than non-metallocene-catalyzed polymers; however, metallocene-catalyzed polymers tend to be more expensive and higher in viscosity. The high viscous nature of the metallocene-catalyzed polymers, therefore require large amounts of tackifiers and/or oils in the adhesive in order to be sprayable at typical application temperatures.

There is a need in the art for elastic attachment hot melt adhesives that possess good performances such as balanced elasticity and strength, balanced long-term elasticity and strength, cost and consistent sprayability at the application temperatures. The current invention fulfills this need.

BRIEF SUMMARY OF THE INVENTION

The invention provides elastic attachment hot melt adhesives formed with non-metallocene catalyzed polymers. The elastic attachment hot melt adhesives have desirable creep performance under long term aging conditions.

In the inventive embodiment, the elastic attachment hot melt adhesive comprises a tackifier, a plasticizer and a polymer having a viscosity lower than 200,000 mPas at 200°C in accordance with ASTM D3236. The polymer comprises a non-metallocene catalyzed polymer that has been degraded with peroxide and/or heat. The non-metallocene catalyzed polymer is a semicrystalline polypropylene homo- or copolymer with a heat of fusion greater than 20 J/g, measured in accordance with ASTM D3418-12. The polymer further comprises a propylene copolymer as flexibilizer, having a heat of fusion less than 15 J/g, and the flexibilizer is present in amounts less than the non-metallocene catalyzed polymer. The adhesive has a tan $\delta$ value greater than 30; preferably, greater than 40; and more preferably, greater than 50. The amount of tackifier is less than the amount of the polymer in the adhesive. The plasticizer is selected from the group consisting of paraffinic oil, naphthenic oil, aromatic oil, long chain partial ether ester, alkyl monoesters, epoxidized oils, dialkyl diesters, aromatic diesters, alkyl ether monoester, polybutenes, phthalates, benzoates, adipic esters and is contained in an amount of 1 to 30 wt.-%, based on the total weight of the adhesive.

The elastic attachment hot melt adhesive may comprise tackifier and a plasticizer, selected from the group consisting of paraffinic oil, naphthenic oil, aromatic oil, long chain partial ether ester, alkyl monoesters, epoxidized oils, dialkyl diesters, aromatic diesters, alkyl ether monoester, polybutenes, phthalates, benzoates, adipic esters in an amount of 1 to 30 wt.-%, based on the total weight of the adhesive as well as a polymer that comprises (A) greater than 50wt% of a non-metallocene catalyzed polymer semi-crystalline polypropylene homo or copolymer with a heat of fusion greater than 20 J/g and (B) less than 50% of a flexibilizer with a heat of fusion less than 15 J/g. The polymer has a viscosity lower than 200,000 mPas at 200°C in accordance with ASTM D3236, and is formed by degradation with peroxide and/or heat. The wt% of the non-metallocene catalyzed polymer and the flexibilizer is based on the total wt% of the polymer, and the heat of fusion is measured in accordance with ASTM D3418-12.

Another inventive embodiment is directed to a laminant comprising (a) a nonwoven substrate; (b) an elastic strand coated with an elastic attachment hot melt adhesive; and (c) a film substrate, whereby the two substrates are attached onto the elastic strand with the elastic attachment hot melt adhesive. The elastic attachment hot melt adhesive comprises a polymer that comprises greater than 50wt% of a non-metallocene catalyzed polymer semi-crystalline polypropylene homo or copolymer with a heat of fusion greater than 20 J/g and less than 50% of a flexibilizer with a heat of fusion less than 15 J/g. The polymer has a viscosity lower than 200,000 mPas at 200°C in accordance with ASTM D3236, and is formed by degradation process with a peroxide and/or heat. The wt% of the non-metallocene catalyzed polymer and the flexibilizer is based on the total wt% of the polymer, and the heat of fusion is measured in accordance with ASTM D3418-12. The elastic attachment hot melt adhesive further comprises a tackifier and a plasticizer selected from the group consisting of paraffinic oil, naphthenic oil, aromatic oil, long chain partial ether ester, alkyl monoesters, epoxidized oils, dialkyl diesters, aromatic diesters, alkyl ether monoester, polybutenes, phthalates, benzoates, adipic esters in an amount of 1 to 30 wt.-%, based on the total weight of the adhesive.

BRIEF DESCRIPTION OF THE DRAWING

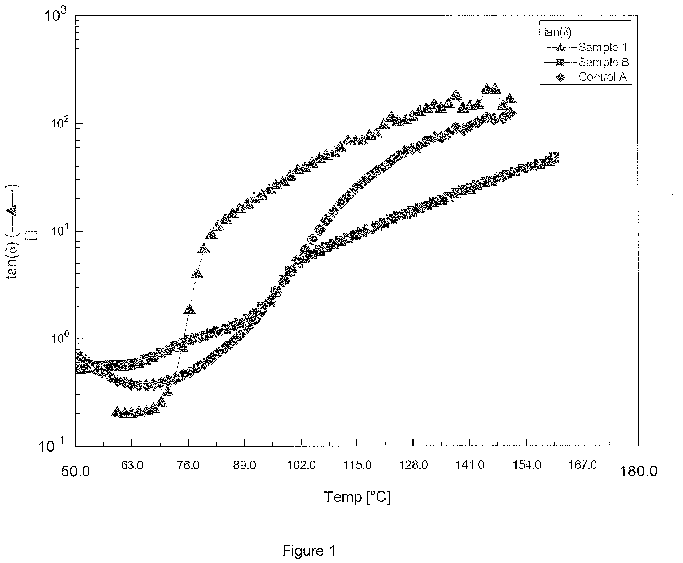

Figure 1 is a graph of tan $\delta$ curves of elastic attachment adhesives.

DETAILED DESCRIPTION OF THE INVENTION

The elastic attachment adhesive comprises a non-metallocene catalyzed polymer that has been thermomechanically degraded with peroxide and/or heat.

The term "polymer" as used herein includes homopolymers and copolymers such as terpolymers, tetrapolymers, etc. The non-metallocene catalyzed polymer comprises at least one semi-crystalline polypropylene (co)polymer.

The term "semi-crystalline" used for the polypropylene polymer refers to those polymeric materials that contain both crystalline and amorphous regions in the solid state. In the crystalline region, the molecular chains of the polymers are arranged in ordered, three dimensional arrays and the structures can be fully characterized by their unit cells

(the smallest structural unit used to describe a crystal). The amorphous polymers, in contrast, do not have an ordered three-dimensional structure in the solid state, for their molecular chains are in a completely random fashion. Quantitatively, the semi-crystalline polymers can be distinguished from the completely amorphous polymers by observing the presence or absence of a melting point (Tm) and the associated enthalpy or heat of fusion ($\Delta$Hm) derived from the transformation of the crystalline state to liquid state upon heating. All semi-crystalline polymers exhibit a melting point, whereas the melting point is absent for amorphous polymers. Amorphous polymers undergo a transition from a glassy solid to a rubbery elastic state in a narrow temperature range around the glass transition temperature. The glass transition temperature (Tg) is different than the melting point (Tm). Unlike the melting transition of the crystalline materials, the glass transition of amorphous polymers does not have an enthalpy change ($\Delta$H) associated with it.

The enthalpy or heat of fusion ($\Delta$Hm) can be determined by Differential Scanning Calorimetry (DSC). The technique is well known to those skilled in the art and is well described in the scientific literature.

The term "semi-crystalline propylene polymer or copolymers" as used in the present invention refers to propylene polymers or copolymers having a heat of fusion, as determined by DSC, of at least 20 J/g, preferably at least 25 J/g, and more preferably at least 30 J/g. The term "heat of fusion" as used herein, refers to the energy absorbed in converting a material from a crystalline or semi-crystalline state to an amorphous state, and this value can be determined by various analytical methods, including ASTM D3418-12 and ISO 11357-3. Unless otherwise stated, all reported heat of fusion values are determined in accordance with ASTM D3418-12, with minor adjustments as described herein. The semicrystalline propylene polymer or copolymer as used in the present invention is, commercially available from Lyondell Basell, Ineos, Borealis, TVK and Exxon Mobil.

The polymer further comprises a flexibilizer that has a heat of fusion less than 15 J/g. The flexibilizers are propylene copolymers where the highly random nature of the comonomers in the copolymer gives rise to a predominantly amorphous matrix with small crystalline domains. Therefore, typical flexibilizers are less crystalline than the semi-crystalline polypropylene or copolymer, and the random structure of the copolymers in the flexibilizers decrease the crystalline domains. Useful flexibilizers include Vistamaxx grades from ExxonMobil and Versify grades from Dow. The amount of the flexibilizer present is less than the amount of the non-metallocene catalyzed polymer. In another embodiment the flexibilizer is present in amounts less than 50wt% of the total of the polymer. In another embodiment the flexibilizer is a propylene copolymer with a comonomer selected from the group consisting of C2, C4, C5, C6, C7, C8, C9, C10, C11 and C12 monomers.

The elastic attachment adhesive comprises thermomechanically degraded polymer. In the context of the present invention, the term "thermomechanical degradation" is understood to mean polymer chain shortening and molecular weight reducing process of a polymer and this typically occurs in an extruder under heat and shear stress. The weight average molecular weight (Mw) of the degraded polymer is lower than the weight average molecular weight (Mw) of the original polymer. Also, the thermomechanically degraded polymer exhibits a lower melt viscosity than the original polymer. Degradation allows for the controlled scission of the polymer chain, and thus, the degraded polymer also has a narrower molecular weight distribution, in addition to the lower weight average molecular weight and the lower viscosity.

Thermomechanically degraded polymer is typically degraded under shear stress, preferably in an extruder. In order to increase the efficiency of the thermomechanical degradation, it is advantageous to carry out the degradation in the presence of at least one radical donor and/or in the presence of oxygen.

The non-metallocene catalyzed polypropylene (co)polymers, alone or combined with a flexibilizer, is degraded in the presence of at least one radical donor and/or in the presence of oxygen. In the context of the present invention, a "radical donor" is understood to mean a substance that under external influence, such as heat and/or radiation, decomposes into radicals. The radical donors are primarily compounds that contain peroxo or diazo groups, wherein peroxides, such as for example organic peroxides, are preferred due to their commercial availability and ease of handling. Suitable radical sources can be selected for example from the following products or compounds and/or from any mixtures thereof. TRIGONOX 101(R) (2,5-dimethyl-2,5-di-[tert-butylperoxy]hexane), TRIGONOX 301(R) (3,6,9- triethyl-3,6,9-trimethyl-1,4,7-triperoxonane), both commercially available from AKZO, di-tert- amyl peroxide, commercially available from CK Witco as DTAP(R) and from AKZO as Trigonox 201(R), dicumyl peroxide, di-tert-butyl peroxide, 2,5-dimethyl-2,5-di(tert-butyl peroxy)-3-hexyne, 1,3-bis(tert-butyl peroxy isopropyl)benzene, 1, 1-bis(tert-butyl peroxy)-3,3,5-trimethylcyclohexane, n-butyl-4,4-bis(tert-butyl peroxy)valerate, benzoyl peroxide, p-chlorobenzoyl peroxide, 2,4-dichlorobenzoyl peroxide, tert-butyl peroxybenzoate, tert-butyl peroxy isopropyl carbonate, diacetyl peroxide, lauroyl peroxide, tert-butyl cumyl peroxide, tert- butyl peroxy 2-ethylhexanoate. Preferred peroxides have a half-life, determined in monochlorobenzene at 150°C, of 0.01 to 10 hours, preferably from 0.1 to 5 hours and particularly preferably from 0.3 to 3 hours. Preferably, the radical donor is advantageously added in an amount of from 0.02 to 5 wt%, more preferably from 0.05 to 2 w.% and especially from 0.1 to 1 w.%, based on the total amount of polypropylene (co)polymer.

The process for reducing the melt viscosity of the non-metallocene catalyzed polymer starting material with at least one radical donor under shear stress at a temperature above the softening point of the polymer blend starting material can be carried out in single screw extruders, twin screw extruders, Banbury mixers, kneaders and roll mills. Of these, it is particularly preferred to use single screw extruders, twin screw extruders and kneaders.

The degraded non-metallocene catalyzed polymer has a lower melt viscosity, weight average Mw and narrower molecular weight distribution than the original polymer. In one embodiment, the degraded non-metallocene catalyzed polymer has a melt viscosity less than 200,000 mPas at 200 °C, measured in accordance with ASTM D3236. The heat of fusion of the non-metallocene catalyzed polymer is changed minimally during the thermomechanical degradation, and continues to have a value greater than 20J/g, preferably greater than 25J/g, and more preferably greater than 30J/g.

The thermomechanically degraded polymer is combined with a tackifier, a plasticizer and/or a wax to form the elastic attachment adhesive.

"Tackifying resins" are understood to mean in particular polymeric additives that increase their autoadhesion (tack, inherent tack, self-adhesion). The tackifier component is present in amounts less than the polymer.

Typical tackifier has a Ring and Ball softening points, as determined by ASTM method E28, of 70°C to 180°C, more preferably 95°C to 150°C. Useful tackifying resins may include any compatible resin or mixtures thereof, such as natural and modified rosins including, for example, as gum rosin, wood rosin, tall oil rosin, distilled rosin, hydrogenated rosin, dimerized rosin, resinates, and polymerized rosin; glycerol and pentaerythritol esters of natural and modified rosins, including, for example, the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natured terpenes, including, for example, styrene/terpene and alpha methyl styrene/terpene; polyterpene resins having a softening point, as determined by ASTM method E28, from 70°C to 150°C; phenolic modified terpene resins and hydrogenated derivatives thereof including, for example, the resin product resulting from the condensation, in an acidic medium, of a bicyclic terpene and a phenol; aliphatic petroleum hydrocarbon resins having a Ball and Ring softening point from 70°C to 135°C; aromatic petroleum hydrocarbon resins and the hydrogenated derivatives thereof; and alicyclic petroleum hydrocarbon resins and the hydrogenated derivatives thereof. Examples of hydrogenated tackifiers particularly suitable include Escorez 5400 from Exxon Mobil Chemicals, Arkon PI 00 from Arakawa and Regalite SI 100 from Eastman Chemical, and the like. Also included are the cyclic or acyclic C5 resins and aromatic modified acyclic or cyclic resins. Examples of commercially available rosins and rosin derivatives that could be used to practice the invention include SYLVALITE RE 1 10L, SYLVARES RE 115, and SYLVARES RE 104 available from Arizona Chemical; Dertocal 140 from DRT; Limed Rosin No.I,GB-120, and Pencel C from Arakawa Chemical. Examples of commercially available phenolic modified terpene resins are Sylvares TP 2040 HM and Sylvares TP 300, both available from Arizona Chemical.

Preferred tackifiers are synthetic hydrocarbon resins. Included are aliphatic or cycloaliphatic hydrocarbons, aromatic hydrocarbons, aromatically modified aliphatic or cycloaliphatic hydrocarbons and mixtures thereof.

Non-limiting examples include aliphatic olefin derived resins such as those available from Goodyear under the Wingtack Extra trade name and the Escorez 1300 series from Exxon. A common C5 tackifying resin in this class is a diene-olefin copolymer of piperylene and 2-methyl-2-butene having a softening point of 95 °C. This resin is available commercially under the trade name Wingtack 95. Eastotac series from Eastman are also useful in the invention.

Also useful are aromatic hydrocarbon resins that are C9 aromatic/aliphatic olefin- derived and available from Sartomer and Cray Valley under the trade name Norsolene and from Rutgers series of TK aromatic hydrocarbon resins. Norsolene MI 090 is a low molecular weight thermoplastic hydrocarbon polymer having a Ring and Ball softening point of 95-105°C and is commercially available from Cray Valley.

Alpha methyl styrene such as Kristalex 3085 and 3100 from Eastman Chemicals, Sylvares S A 100 from Arizona chemicals are also useful as tackifiers in the invention. Mixtures of two or more described tackifying resins may be required for some formulations.

Small quantities of alkyl phenolic tackifiers can be blended with additional tackifier agents detailed above to improve the high temperature performance of these adhesives. Alkyl phenolics added in less than 20 wt % of the total weight of the adhesive are compatible and in the proper combination increase high temperature adhesive performance. Alkyl phenolics are commercially available from Arakawa Chemical under the Tamanol trade name and in several product lines from Schenectady International.

The elastic attachment adhesives of the present invention also contains a plasticizer, including a liquid plasticizer. Suitable plasticizers include paraffinic oil, naphthenic oil, aromatic oil, long chain partial ether ester, alkyl monoesters, epoxidized oils, dialkyl diesters, aromatic diesters, alkyl ether monoester, polybutenes, phthalates, benzoates, adipic esters and the like. Particularly preferred plasticizers include mineral oil, aliphatic oils, polybutene, polyisobutylene, olefin oligomers and low molecular weight polymers, vegetable oil, animal oils and derivatives.

The plasticizer is present at 1 to 30 wt%, more preferably 3 to 15 wt%, based on the total weight of the elastic attachment adhesive.

In some embodiments, however, oils may not be desired and is present at less than 5 wt%, preferably less than 3 wt%, more preferably less than 1 wt%, more preferably less than 0.5 wt% or even essentially free of oil, based upon the total weight of the adhesive.

Waxes can be optionally added to the elastic attachment adhesive. When added, waxes are added in an amount up to 10 wt%, based on the total amount of the adhesive. The quantity is gauged so that, on the one hand, the viscosity is reduced to the required range and, on the other hand, the adhesion or the adhesive toughness is not adversely affected.

The wax can be of natural or synthetic origin and can optionally also be in chemically modified form. Naturally occurring waxes that can be added are vegetable waxes, animal waxes, mineral waxes or petrochemical waxes. Suitable chemically modified waxes are hard waxes, such as Montan ester waxes, Sasol waxes, etc. Suitable synthetic waxes are polyalkylene waxes and polyethylene glycol waxes. Petrochemical waxes are preferably added such as petrolatum, paraffin waxes, microcrystalline waxes as well as synthetic waxes.

The adhesives of the present invention may desirably also contain at least one stabilizer and/or at least one antioxidant. These compounds are added to protect the adhesive from degradation caused by reaction with oxygen induced by, for example, heat, light, or residual catalyst from the raw materials such as the tackifying resin.

Applicable stabilizers or antioxidants included herein are high molecular weight hindered phenols and multifunctional phenols such as sulfur and phosphorous-containing phenol. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus provides the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-d i-tert-butyl-4-hydroxyphenyl)-propionate; n-octadecyl-3(3,5-ditert-butyl-4-hydroxyphenyl)-propionate; 4,4'-methylenebis(2,6-tert-butyl-phenol); 4,4'-thiobis(6- tert-butyl-o-cresol); 2,6-di-tertbutylphenol; 6-(4-hydroxyphenoxy)-2,4-bis(n-octylthio)-1,3,5 triazine; di-n-octylthio)ethyl 3,5-di-tert-butyl-4-hydroxy-benzoate; and sorbitol hexa[3-(3,5-d itert-butyl-4-hydroxy-phenyl)-propionate].

Such antioxidants are commercially available from BASF and include Irganox®565, 1010, 1076 and 1726 which are hindered phenols. These are primary antioxidants that act as radical scavengers and may be used alone or in combination with other antioxidants, such as, phosphite antioxidants like IRGAFOS®168 available from BASF. Phosphite antioxidants are considered secondary antioxidants and are not generally used alone. These are primarily used as peroxide decomposers. Other available catalysts are CYANOX®LTDP available from Cytec Industries and ETHANOX® 330 available from Albemarle Corp. Many such antioxidants are available either to be used alone or in combination with other such antioxidants. These compounds are added to the hot melts in small amounts, typically less than 10 wt%, and have no effect on other physical properties. Other compounds that could be added that also do not affect physical properties are pigments, which add color, or fluorescing agents. Additives like these are known to those skilled in the art.

Stabilizers are preferably added in an amount of 0.1 to 3 wt%, preferably 0.2 to 1.5 wt%, each based on the total amount of the adhesive. In general stabilizers are incorporated in order to protect the adhesive as the end product of the process according to the invention against oxidative or thermal degradation reactions that can occur in storage and/or application. The usable stabilizers preferably include hindered phenols and/or multifunctional phenols, such as for example sulfur-containing and/or phosphorus-containing phenols. Hindered phenols are understood to mean compounds, in which at least one sterically hindered group, such as for example a tert-butyl group, is bonded to the phenol, wherein the sterically hindered groups are located especially in the ortho and/or para position to the phenolic OH group. Exemplary hindered phenols that are suitable stabilizers can be selected from the following compounds or from any of their mixtures: 1,3,5-trimethyl-2,4,6-tris(3,5-di-tert.-butyl-4- hydroxybenzyl)benzene, pentaerythritol tetrakis-(3,5-di-tert.-butyl-4-hydroxyphenyl)propionate, n-octadecyl-(3,5-di-tert.-butyl-4-hydroxyphenyl) propionate, 4,4'-methylene bis(4-methyl-6- tert.-butylphenol), 4,4'-thiobis(6-tert.-butyl-o-resol), 2,6-di-tert.-butylphenol, 6-(4- hydroxyphenoxy)-2,4-bis(n-octylthio)-1,3,5-triazine, 2,4,6-tris(4-hydroxy-3,5-di-tert.- butylphenoxy)-1,3,5-triazine, di-n-octadecyl-3,5-di-tert.-butylbenzyl phosphonate, 2-(n- octylthio)ethyl-3,5-di-tert.-butyl-4-hydroxybenzoate and sorbitol hexa-(3,3,5-di-tert.-butyl-4- hydroxyphenyl)propionate.

Further additives can be added, such as for example crosslinking agents, fillers, nucleating agents, adhesion promoters, elastomers, colorant, rheology modifiers which are known to the person skilled in the art and can be selected from a great number of commercially available products as a function of the desired properties. Additional polymers of higher or lower molecular weight (Mw) than the degraded polypropylene (co)polymer can be added to modify the adhesive properties. These polymers can be any of the conventional hot melt polymers as described in: Paul CW (2002) Hot Melt Adhesives in: Chaudhury M and Pocius AV (ed) Surfaces, Chemistry and Applications: Adhesion Science and Engineering, Elsevier Science B. V., The Netherlands pp 711 - 757.

The elastic attachment adhesive is processed by heating and blending the thermomechanically degraded polymer, the tackifier, the plasticizers, and optional components, until homogeneous. The tackifier, the plasticizer, and the optional components can be heated or heated/blended using an extruder or hot-melt processing equipment. In one embodiment, the tackifier, the plasticizer, and the optional components are added at the end of the thermomechanical degradation process of the polymer at the extruder to form the elastic attachment adhesive. The resultant elastic attachment adhesive can be used directly to bond and laminate substrates or it can be cooled and processed to make a solid form (e.g., pellets, pillows, or cast into molds or drums, etc.,) which can be stored and/or shipped. The solid adhesive can be re-liquefied prior to bonding substrates.

An elastic attachment article is formed by applying the molten elastic attachment adhesive onto a substrate, at an application temperature of 340°F (171°C) or less, preferably less than 320°F (160°C), more preferably less than 300°F (149°C), and placing another substrate onto the molten adhesive, whereby the adhesive is sandwiched in between the two substrates. In another embodiment, a multilayer elastic attachment laminant is formed by applying the molten elastic attachment adhesive onto both sides of a substrate, at an application temperature of 340°F (171°C) or less, preferably less than 320°F (160°C), more preferably less than 300°F (149°C), and placing the substrate in between two additional substrates, whereby the adhesive adheres three substrates together.

The elastic attachment adhesive is typically applied onto a portion of an elastic strand. Non-limiting examples of elastic strand comprise polyester, polyurethane, polyether, polyamide, polyacrylate, polyester-b-polyurethane block copolymer, polyether-b-polyurethane block copolymer or polyether-b-polyamide block copolymer. Suitable elastic multifilament strands include Lycra (Invista, Inc.) Confi-Fit™ (Fulflex).

The adhesive according to the invention may be used to bond or laminate the same or different substrates materials to one another. In one embodiment, the elastic strand is attached onto a nonwoven substrate with a basis weight in the range of 10 to 25 gsm (g/m²) based on fibers of polyethylene, polypropylene, polyester or cellulose. In another embodiment, the elastic stand is attached to a flexible, elastomeric, sheet-like film. Suitable flexible, elastomer sheet-like film are formed from polyethylene, polypropylene, polyester, polyurethane, polyamide, or combinations thereof, including random or graft copolymers such as styrene block copolymers, polyether-b- polyurethane block copolymer. Yet in another embodiment, the elastic strand is positioned in between one nonwoven substrate and one elastomeric film with the elastomeric attachment adhesive. The add-on level of the elastic attachment adhesive varies, depending on the type of applicators used, but typically ranges from 2 to 50 gsm, preferably from 5 to 15 gsm for spiral application. The add-on for strand-specific applications, such as Omega™ and Surewrap™, varies from 20 to 50 milligrams of adhesive/meter/strand. Non-limiting applications include spiral, OMEGA® (ITW), SUREWRAP® (Nordson), and such techniques are known to those skilled in the art.

Delivery of consistent and uniform adhesive applied onto the elastic strand is an important factor to ensure acceptable performance of the laminant. Adhesives that spray unevenly and inconsistently, e.g., contain polymers with wide molecular weights or that sprays with angel hair fly-aways, typically have poor creep resistance performance as the laminant is stretched and aged. Another important factor is adhesion: the adhesive should remain adhered onto the substrates without failure under strain of deformation. The elastic attachment adhesive of the instant invention sprays evenly and consistently and remains adhered onto the substrates under strain.

The elastic attachment adhesive is well suited for elastic attachment articles. Such articles require low deformation of the adhesive during exposure to heat and strain over a number of hours. It is preferred that the deformation is as small as possible under the heat and strain. One typical method of quantifying the resistance to deformation is by measuring the creep resistance. Creep resistance is a value calculated by measuring the initial creep resistance of the article, and then applying a strain for a specified temperature and time, and then re-measuring the resistance. The elastic attachment adhesive of the instant invention has an initial creep resistance that is less than 20% after extending the laminated adhesive to 300% at 38°C for four hours. Moreover, the elastic attachment adhesive has a creep resistance that is less than 20% after four weeks storage at 50°C followed by extending the adhesive to 300% strain at 38°C for four hours.

For strand-specific elastic application, the ability to apply consistent and even amounts of the adhesive directly on the elastic strand is a key factor to ensure acceptable performance, such as creep resistance. The tan $\delta$ value is a measurable value of the adhesive that can be used to correlate the ease of applying consistent and even amounts of adhesive onto a substrate. The tan $\delta$ of the elastic attachment adhesive is the ratio of the loss modulus (G") to the storage modulus (G'): (G"/G'). This is a dimensionless quantity that is proportional to the ratio of the energy lost to energy stored. It has been discovered that the adhesives with a tan $\delta$ value greater than 30, preferably greater than 40 and more preferably greater than 50 at the application temperature, spray consistently and evenly with conventional applicators. The elastic attachment adhesive has a tan $\delta$ value of greater than 30, preferably greater than 40, and more preferably greater than 50. The non-metallocene catalyzed polymer based elastic attachment adhesive of the instant invention has a tan $\delta$ value greater than 50 at the application temperature and it sprays consistently and evenly onto substrates.

The elastic attachment articles are suitable as absorbent articles such as diapers, diaper pants, baby wipes, training pants, absorbent underpants, child care pants, swimwear, and other disposable garments; feminine care products including sanitary napkins, wipes, menstrual pads, panty liners, panty shields, tampons, and tampon applicators; adult-care products including wipes, pads, containers, incontinence products, and urinary shields; clothing components; athletic and recreation products; products for applying hot or cold therapy, medical gowns (i.e., protective and/or surgical gowns), surgical drapes, caps, gloves, face masks, bandages, wound dressings, wipes, covers, containers, filters, disposable garments and bed pads, medical absorbent garments, underpads; construction and packaging supplies, industrial pads including meat pads; products for cleaning and disinfecting, wipes, covers, filters, towels, bath tissue, facial tissue, nonwoven roll goods, home-comfort products including pillows, pads, cushions, masks and body care products such as products used to cleanse or treat the skin, laboratory coats, cover-alls, and the like.

Examples

The heat of fusion ($\Delta$Hm) of the polymer and flexibilizer was determined by DSC, in accordance with ASTM D3418-12.

Adhesive preparation: Sample adhesive, unless otherwise stated, was prepared by combining the components together at a temperature where the polymer was molten, and the mixture became homogeneous.

The viscosity of the adhesive was measured with a standard Brookfield viscometer, spindle 27 in accordance with ASTM D3236.

The softening point of the adhesive was measured with a Ring and Ball softening point set up in accordance with ASTM E28.

The melting point of the adhesive was measured with a differential scanning calorimetry apparatus (DSC) in accordance with ASTM 3418-12.

Storage modulus and loss modulus were measured and the tan $\delta$ value was calculated by ARES M Rheometer from Rheometric Scientific using the Temperature Ramp Method (ARES LS). A sample was placed between parallel plates (25 mm geometry diameter) with a 2 mm gap. Dynamic temperature sweep from 160°C to 0°C was tested with a frequency of 10 rad/sec and cooling rate of 5°C/minute. The storage modulus (G') and the loss modulus (G") were measured from torque and strain. Their ratio (G"/G'), also known as the tan ($\delta$), was calculated, and shown in Figure 1.

Elastic sample preparation: Elastic sample laminations were prepared by continuous elastic coating application methods known in the art. The elastic adhesive was applied with add-on levels of 25 or 35 mg/m/strand onto a Lycra Invista 800 elastic strand with ITW Omega strand applicator at a 143°C to 155°C using a high speed laminator at 1000 fpm with 0.1 sec open time. The elastic strand is then laminated between Clopay DH 276 PP polyfilm substrate and NW PGI nonwoven (15 gsm) substrate with a nip roller and cooled to room temperature.

Elastic Creep Resistance Evaluation: Elastic creep resistance values were measured for initial and aged elastic samples. For the aged samples, the elastic samples were aged at 40°C for 2 weeks or 4 weeks. The creep resistance values are listed as an average of five samples.

Creep measurement: The length of an elastic strand adhered in the stretched condition between a nonwoven sheet and a polymeric film was measured and marked ("starting length"). A sample length is stretched outside of the marked area. The elastic strands are then cut at the marked area. The amount that the filament retracts is measured following a 4 hour period at 38°C. The percent creep is then calculated in the following manner:

$$\% \text{ creep} = \frac{(\text{starting length} - \text{final length})}{\text{starting length}} \times 100\%$$

Acceptable creep resistance of the adhesive is 35% or less.

Control A and comparative samples B, C and D were prepared with the components listed in Table 1. Control A is Henkel DISPOMELT® 897B, a rubber-based (styrene-butadiene-styrene and/or styrene-isoprene-styrene) adhesive. Polymer in Comparative Sample B is a metallocene catalyzed ethylene-octene block olefin polymer. Comparative samples C (semicrystalline polypropylene copolymer) and D (amorphous polypropylene copolymer) were formed with metallocene catalyzed polymer and non-metallocene catalyzed polymers, respectively, that have a ΔHm value less than 20J/g. The properties of the elastic attachment adhesives and elastic samples are listed in Table 1.

Table 1. Comparative Samples

|  | Control A | Comparative Sample B | Comparative Sample C | Comparative Sample D |
|---|---|---|---|---|
| DM-897B | 100 |  |  |  |
| Infuse 9817, ΔHm = 38 J/g (Dow) |  | 15.0 |  |  |
| Vistamaxx 2330, ΔHm = 16 J/g (ExxonMobil) |  |  | 30.0 |  |
| Rextac RT 2814, ΔHm < 5 J/g (Rextac) |  |  |  | 70.0 |
| Tackifier (Escorez 5400, ExxonMobil) |  | 60.0 | 54.5 | 29.7 |
| Wax (Epolene C10, Westlake Chemical) |  | 14.5 |  |  |
| Liquid plasticizer (Calsol 5550, Calumet) |  | 10.0 | 15.0 | 0 |
| Antioxidant (Irganox 1010, BASF) |  | 0.5 | 0.5 | 0.3 |
| Adhesive Properties | | | | |
|  |  |  |  |  |
| Viscosity 150°C (mPas) | 4,200 | 8750 | 201,000 | 3500 |
| Softening point (°C) | 76 | 111 | 148 | 80 |
| Melting point (°C) | N/A | 99 | 147 | N/A |
| Elastic Attachment Sample Properties | | | | |
| Initial elastic creep resistance at 25 mq/m/strand (%) | 5 ± 1 | 8 ± 2 | * | 68 |
| 2 week aged elastic creep resistance at 25 mg/m/strand (%) | 13 ± 2 | 55 ± 8 | * | ** |
| 4 week aged elastic creep resistance at 25 mq/m/strand (%) | 14 ± 3 | 51 ± 6 | * | ** |
| Initial elastic creep resistance at 35 mq/m/strand (%) | 3 ± 1 | 4 ± 1 | * | 68 |
| 2 week aged elastic creep resistance at 35 mq/m/strand (%) | 8 ± 3 | 46 ± 6 | * | ** |

(continued)

| Elastic Attachment Sample Properties | | | | |
|---|---|---|---|---|
| 4 week aged elastic creep resistance at 35 mg/m/strand (%) | 9 ± 4 | ** | * | ** |

| * Due to the high viscosity of the adhesive at 150°C and 160°C, elastic attachment samples could not be prepared using standard coater setting point temperatures. Also application temperatures above 160°C lead to film burn-through. ** Due to the high creep resistance values of earlier tests, aged elastic creep resistance were not measured. |
|---|

Elastic attachment samples made with rubber based adhesives (Control A) have low initial elastic creep resistances and maintain this resistance under the aging conditions. Elastic attachment samples made with metallocene catalyzed ethylene-octene block copolymers (Comparative Sample B) had acceptable initial creep resistance; however, upon aging, the creep resistance increased to above 55%. Elastic attachment adhesives formed with semicrystalline polypropylene copolymer (Comparative Sample C) resulted in viscosity that is over 200,000 mPas at 150°C, and thus, could not be sprayed at 143°C - 155°C. Adhesive formed with amorphous polypropylene copolymer (Comparative Sample D) did not indicate any creep resistivity.

Non-metallocene catalyzed polymers for the sample adhesives were formed by degrading them with heat and peroxide. For Polymer Blends X, Y and Z, the flexibilizer was combined with the polymer (original viscosity greater than 1,000,000 mPas), and degraded together in the manner described in US 2012/0016086 until the blend reached the noted final viscosity. The polymer was a propylene copolymer with a $\Delta$Hm value of 32J/g and the flexibilizer was a flexible propylene copolymer with a $\Delta$Hm value of 2.8J/g.

Table 2. Polymer Blends

| Polymer Blend | X | Y | Z |
|---|---|---|---|
| Ratio of Polymer: Flexibilizer | 70:30 | 70:30 | 60:40 |
| Final viscosity (mPas) | 4,300 | 9,900 | 5,200 |

The sample adhesives were formed by combining the polymer blends of Table 2 with additional components listed in Table 3. Sample adhesive properties and elastic attachment sample properties made with the sample adhesives are also listed in Table 3.

Table 3. Adhesive Samples

| | Sample 1 | Sample 2 | Sample 3 |
|---|---|---|---|
| Polymer Blend X | 50.0 | | |
| Polymer Blend Y | | 45.0 | |
| Polymer Blend Z | | | 55.0 |
| Tackifier (Escorez 5400, ExxonMobil) | 39.5 | 44.5 | 39.5 |
| Liquid plasticizer (Calsol 5550, Calumet) | 10.0 | 10.0 | 5.0 |
| Antioxidant (Irqanox 1010, BASF) | 0.5 | 0.5 | 0.5 |
| Adhesive Properties | | | |
| Viscosity 150°C (mPas) | 3,600 | 6,000 | 5,500 |
| Softening point (°C) | 131 | 131 | 133 |
| Melting point (°C) | 126 | 126 | 127 |
| Elastic Attachment Sample Properties | | | |
| Initial elastic creep resistance at 25 mq/m/strand (%) | 5 ± 3 | 3 ± 1 | 7 ± 4 |
| 2 week aged elastic creep resistance at 25 mq/m/strand (%) | 26 ± 6 | 16 ± 5 | 27 ± 8 |
| 4 week aged elastic creep resistance at 25 mq/m/strand (%) | 37 ± 13 | 17 ± 3 | 28 ± 8 |

(continued)

| Elastic Attachment Sample Properties | | | |
|---|---|---|---|
| Initial elastic creep resistance at 35 mq/m/strand (%) | 2 ± 1 | N/A | 2 ± 2 |
| 2 week aged elastic creep resistance at 35 mq/m/strand (%) | 27 ± 3 | N/A | 13 ± 11 |
| 4 week aged elastic creep resistance at 35 mq/m/strand (%) | 31 ± 6 | N/A | 18 ± 9 |

The sample adhesives have acceptable initial and long-term creep resistance.

Sprayability: Sample 1 and Comparative Sample B and C were prepared by as described above. Sample 1 sprayed consistently and evenly throughout the entire elastic strand. This consistent and even coating observed for sample 1 is comparable to the metallocene- based adhesives of samples B and C.

Figure 1 shows tan δ curves of Sample 1, Comparative Sample B and Control A, which is a rubber-based elastic adhesive. As shown in Figure 1, the tan δ value of Sample 1 is 145 at the application temperature of 143°C. Sample 1, formed with a non-metallocene propylene copolymer, has similar tan δ curve as adhesives formed with metallocene catalyzed olefins (Comparative Samples B) and rubber-based elastic adhesive (Control A).

**Claims**

1. An elastic attachment hot melt adhesive comprising a tackifier, a plasticizer and a polymer, the polymer having a viscosity lower than 200,000 mPas at 200°C measured in accordance with ASTM D3236;

    wherein the polymer comprises a non-metallocene catalyzed polymer degraded with peroxide and/or heat; and wherein the non-metallocene catalyzed polymer is a semicrystalline polypropylene homo- or copolymer with a heat of fusion greater than 20 J/g measured in accordance with ASTM D3418-12; wherein the adhesive has a tan δ value of greater than 30 at the adhesive application temperature (the tan δ being calculated by ARES M Rheometer using the temperature ramp method (ARES LS) by placing a sample between parallel plates (25 mm geometry diameter) with a 2 mm gap, testing dynamic temperature sweep from 160°C to 0°C with a frequency of 10 rad/sec and cooling rate of 5°C/minute and calculating the ratio of the storage modulus (G') and the loss modulus (G") (G"/G') to obtain the tan δ value);
    wherein the amount of tackifier is less than the amount of the polymer in the adhesive; and wherein the plasticizer is selected from the group consisting of paraffinic oil, naphthenic oil, aromatic oil,
    long chain partial ether ester, alkyl monoesters, epoxidized oils, dialkyl diesters, aromatic diesters, alkyl ether monoester, polybutenes, phthalates, benzoates, adipic esters and is contained in an amount of 1 to 30 wt.-%, based on the total weight of the adhesive; and
    wherein the polymer further comprises a propylene copolymer as flexibilizer, having a heat of fusion less than 15 J/g, and wherein the flexibilizer is present in amounts less than the non-metallocene catalyzed polymer.

2. The elastic attachment hot melt adhesive of claim 1, wherein the flexibilizer is a propylene copolymer with a comonomer selected from the group consisting of C2, C4, C5, C6, C7, C8, C9, C10, C11 and C12 monomers.

3. The elastic attachment hot melt adhesive of claim 1, further comprising a wax.

4. The elastic attachment hot melt adhesive of claim 3, wherein the wax is a crystalline wax selected from the group consisting of petroleum based waxes, conventional wax, natural-based wax, functionalized wax, polyolefin copolymer and mixtures thereof.

5. A laminant comprising:

    (a) a nonwoven substrate,
    (b) an elastic strand
    (c) an elastic attachment hot melt adhesive comprising a polymer that comprises greater than 50wt% of a non-metallocene catalyzed semi-crystalline polypropylene polymer with a heat of fusion greater than 20 J/g and less than 50 wt% of a propylene copolymer as flexibilizer with a heat of fusion less than 15 J/g;
    wherein the polymer has a viscosity lower than 200,000 mPas at 200°C measured in accordance with ASTM D3236, and is formed by degradation with a peroxide and/or heat;

wherein the wt% is based on the total wt% of the polymer; and

wherein the heat of fusion is measured in accordance with ASTM D3418-12; a tackifier and a plasticizer selected from the group consisting of paraffinic oil, naphthenic oil, aromatic oil, long chain partial ether ester, alkyl monoesters, epoxidized oils, dialkyl diesters, aromatic diesters, alkyl ether monoester, polybutenes, phthalates, benzoates, adipic esters in an amount of 1 to 30 wt.-%, based on the total weight of the adhesive.

6. The laminant of claim 5, wherein the flexibilizer is a propylene copolymer with a comonomer selected from the group consisting of C2, C4, C5, C6, C7, C8, C9, C10, C11 and C12 monomers.

7. The laminant of claim 5, wherein the elastic attachment hot melt adhesive further comprising a wax.

8. The laminant of claim 5, wherein

(i) the laminant has an initial creep performance of less than 20% after exposure to 300% strain at 38°C for 4 hours; and
(ii) the laminant has an aged creep performance of less than 40% after exposure to 300% strain at 38°C for 4 hours after aging at 40°C for 4 weeks.

**Patentansprüche**

1. Schmelzklebstoff für eine elastische Befestigung, umfassend einen Klebrigmacher, einen Weichmacher und ein Polymer, wobei das Polymer eine Viskosität von weniger als 200.000 mPas bei 200 °C, gemessen gemäß ASTM D3236, aufweist;

wobei das Polymer ein nicht durch Metallocen katalysiertes Polymer umfasst, das mit Peroxid und/oder Wärme abgebaut wird; und

wobei das nicht durch Metallocen katalysierte Polymer ein halbkristallines Polypropylen-Homo- oder -Copolymer mit einer Schmelzwärme von mehr als 20 J/g, gemessen gemäß ASTM D3418-12, ist;

wobei der Klebstoff einen tan δ-Wert von mehr als 30 bei der Klebstoffauftragstemperatur aufweist (wobei der tan δ durch ARES M Rheometer unter Verwendung der Temperaturanstiegsmethode (ARES LS) berechnet wird, durch Platzieren einer Probe zwischen parallelen Platten (25 mm Geometriedurchmesser) mit einem Spalt von 2 mm, Testen eines dynamischen Temperaturdurchlaufs von 160 °C bis 0 °C mit einer Frequenz von 10 rad/s und einer Kühlrate von 5 °C/min und Berechnen des Verhältnisses des Speichermoduls (G') und des Verlustmoduls (G") (G" / G'), um den tan δ-Wert zu erhalten);

wobei die Menge von Klebrigmacher geringer als die Menge des Polymers in dem Klebstoff ist; und wobei der Weichmacher aus der Gruppe ausgewählt ist, die aus Paraffinöl, Naphthenöl, aromatischem Öl, langkettigem partiellen Etherester, Alkylmonoestern, epoxidierten Ölen, Dialkyldiestern, aromatischen Diestern, Alkylethermonoester, Polybutenen, Phthalaten, Benzoaten, Adipinsäureestern besteht und in einer Menge von 1 bis 30 Gew.-%, basierend auf dem Gesamtgewicht des Klebstoffs, enthalten ist; und

wobei das Polymer ferner ein Propylencopolymer als Flexibilisator umfasst, der eine Schmelzwärme von weniger als 15 J/g aufweist, und wobei der Flexibilisator in geringeren Mengen als das nicht durch Metallocen katalysierte Polymer vorhanden ist.

2. Schmelzklebstoff für eine elastische Befestigung nach Anspruch 1, wobei der Flexibilisator ein Propylencopolymer mit einem Comonomer ist, das aus der Gruppe ausgewählt ist, die aus C2-, C4-, C5-, C6-, C7-, C8-, C9-, C10-, C11- und C12-Monomeren besteht.

3. Schmelzklebstoff für eine elastische Befestigung nach Anspruch 1, ferner umfassend ein Wachs.

4. Schmelzklebstoff für eine elastische Befestigung nach Anspruch 3, wobei das Wachs ein kristallines Wachs ist, das aus der Gruppe ausgewählt ist, die aus Wachsen auf Erdölbasis, herkömmlichem Wachs, Wachs auf natürlicher Basis, funktionalisiertem Wachs, Polyolefin-Copolymer und Mischungen davon besteht.

5. Laminat, umfassend:

(a) ein Vliesstoffsubstrat,
(b) einen elastischen Strang

(c) einen Schmelzklebstoff für eine elastische Befestigung, umfassend ein Polymer, das mehr als 50 Gew.-% eines nicht durch Metallocen katalysierten halbkristallinen Polypropylenpolymers mit einer Schmelzwärme von mehr als 20 J/g und weniger als 50 Gew.-% eines Propylencopolymers als Flexibilisator mit einer Schmelzwärme von weniger als 15 J/g umfasst;

wobei das Polymer eine Viskosität von weniger als 200.000 mPas bei 200 °C, gemessen gemäß ASTM D3236, aufweist und durch Abbau mit einem Peroxid und/oder Wärme ausgebildet wird;
wobei die Gew.-% auf den Gesamtgew.-% des Polymers basieren; und
wobei die Schmelzwärme gemäß ASTM D3418-12 gemessen wird; ein Klebrigmacher und ein Weichmacher, aus der Gruppe ausgewählt, die aus Paraffinöl, Naphthenöl, aromatischem Öl, langkettigem partiellen Etherester, Alkylmonoestern, epoxidierten Ölen, Dialkyldiestern, aromatischen Diestern, Alkylethermonoester, Polybutenen, Phthalaten, Benzoaten, Adipinsäureestern besteht, in einer Menge von 1 bis 30 Gew.-%, basierend auf dem Gesamtgewicht des Klebstoffs.

6. Laminat nach Anspruch 5, wobei der Flexibilisator ein Propylencopolymer mit einem Comonomer ist, das aus der Gruppe ausgewählt ist, die aus C2-, C4-, C5-, C6-, C7-, C8-, C9-, C10-, C11- und C12-Monomeren besteht.

7. Laminat nach Anspruch 5, wobei der Schmelzklebstoff für eine elastische Befestigung ferner ein Wachs umfasst.

8. Laminat nach Anspruch 5, wobei

(i) das Laminat eine anfängliche Kriechleistung von weniger als 20 % aufweist, nachdem es 4 Stunden lang 300 % Dehnung bei 38 °C ausgesetzt wurde; und
(ii) das Laminat eine Alterungs-Kriechleistung von weniger als 40 % aufweist, nachdem es 4 Stunden lang 300% Dehnung bei 38 °C ausgesetzt wurde, nachdem es 4 Wochen lang bei 40 °C gealtert wurde.

## Revendications

1. Adhésif thermofusible de fixation élastique comprenant un agent collant, un plastifiant et un polymère, le polymère ayant une viscosité inférieure à 200 000 mPas à 200 °C mesurée conformément à la norme ASTM D3236 ;

le polymère comprenant un polymère catalysé non métallocène dégradé avec du peroxyde et/ou de la chaleur ; et le polymère catalysé par un non-métallocène étant un homo ou copolymère de polypropylène semi-cristallin avec une chaleur de fusion supérieure à 20 J/g mesurée conformément à la norme ASTM D3418-12 ;
l'adhésif ayant une valeur de tan $\delta$ supérieure à 30 à la température d'application de l'adhésif (le tan $\delta$ étant calculé par le rhéomètre ARES M à l'aide de la méthode de la rampe de température (ARES LS) en plaçant un échantillon entre des plaques parallèles (diamètre géométrique de 25 mm) avec un espace de 2 mm, en testant un balayage dynamique de température de 160 °C à 0 °C avec une fréquence de 10 rad/sec et une vitesse de refroidissement de 5 °C/minute et en calculant le rapport du module de conservation (G') et du module de perte (G") (G"/G') pour obtenir la valeur de tan $\delta$) ;
la quantité d'agent collant étant inférieure à la quantité de polymère dans l'adhésif ; et le plastifiant étant choisi dans le groupe constitué d'huile paraffinique, d'huile naphténique, d'huile aromatique, d'ester d'éther partiel à longue chaîne, de monoesters d'alkyle, d'huiles époxydées, de diesters de dialkyle, de diesters aromatiques, de monoester d'éther d'alkyle, de polybutènes, de phtalates, de benzoates, d'esters adipiques et étant contenu en une quantité de 1 à 30 % en poids, sur la base du poids total de l'adhésif ; et le polymère comprenant en outre un copolymère de propylène comme flexibilisant, ayant une chaleur de fusion inférieure à 15 J/g, et le flexibilisant étant présent en des quantités inférieures au polymère catalysé par un non métallocène.

2. Adhésif thermofusible de fixation élastique selon la revendication 1, dans lequel le flexibilisant est un copolymère de propylène avec un comonomère choisi dans le groupe constitué des monomères C2, C4, C5, C6, C7, C8, C9, C10, C11 et C12.

3. Adhésif thermofusible de fixation élastique selon la revendication 1, comprenant en outre une cire.

4. Adhésif thermofusible de fixation élastique selon la revendication 3, dans lequel la cire est une cire cristalline choisie dans le groupe constitué de cires à base de pétrole, de cire conventionnelle, de cire à base naturelle, de cire fonctionnalisée, de copolymère de polyoléfine et de leurs mélanges.

**5.** Stratifié comprenant :

(a) un substrat non tissé,
(b) un brin élastique
(c) un adhésif thermofusible de fixation élastique comprenant un polymère qui comprend plus de 50 % en poids d'un polymère de polypropylène semi-cristallin catalysé non métallocène avec une chaleur de fusion supérieure à 20 J/g et moins de 50 % en poids d'un copolymère de propylène comme flexibilisant avec une chaleur de fusion inférieure à 15 J/g;

le polymère ayant une viscosité inférieure à 200 000 mPas à 200 °C mesurée conformément à la norme ASTM D3236, et étant formé par dégradation avec un peroxyde et/ou la chaleur ;
le % en poids étant basé sur le % en poids total du polymère ; et
la chaleur de fusion étant mesurée conformément à la norme ASTM D3418-12 ; un agent collant et un plastifiant étant choisis dans le groupe constitué d'huile paraffinique, d'huile naphténique, d'huile aromatique, d'ester d'éther partiel à longue chaîne, de monoesters d'alkyle, d'huiles époxydées, de diesters de dialkyle, de diesters aromatiques, de monoester d'éther d'alkyle, de polybutènes, de phtalates, de benzoates, d'esters adipiques en une quantité de 1 à 30 % en poids, sur la base du poids total de l'adhésif.

**6.** Stratifié selon la revendication 5, dans lequel le flexibilisant est un copolymère de propylène avec un comonomère choisi dans le groupe constitué des monomères C2, C4, C5, C6, C7, C8, C9, C10, C11 et C12.

**7.** Stratifié selon la revendication 5, dans lequel l'adhésif thermofusible de fixation élastique comprend en outre une cire.

**8.** Stratifié selon la revendication 5, dans lequel

(i) le stratifié a une performance de fluage initiale inférieure à 20 % après exposition à 300 % de déformation à 38 °C pendant 4 heures ; et
(ii) le stratifié a une performance de fluage vieilli inférieure à 40 % après exposition à 300 % de déformation à 38 °C pendant 4 heures après vieillissement à 40 °C pendant 4 semaines.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7989543 B
- US 20110021103 A
- EP 1214368 A
- US 6218457 B
- US 6653385 B

- US 6774069 B
- US 7262251 B
- US 7067585 B
- US 20120016086 A1
- US 20120016086 A

**Non-patent literature cited in the description**

- Hot Melt Adhesives. **PAUL CW.** Surfaces, Chemistry and Applications: Adhesion Science and Engineering. Elsevier Science B. V, 2002, 711-757